# EUROPÄISCHE PATENTANMELDUNG

(11) **EP 2 359 968 A1**
(43) Veröffentlichungstag der Anmeldung: **24.08.2011**
(21) Anmeldenummer: 11154113.2
(22) Anmeldetag: 11.02.2011
(51) Int. Cl.: B23D 21/00, B23D 31/00, B30B 9/32

(54) **Verfahren zum Bearbeiten eines Körpers**

(30) Priorität: 12.02.2010 DE 102010000408
(71) Anmelder: Duesmann & Hensel Recycling GmbH, 63743 Aschaffenburg (DE)
(72) Erfinder: Hensel, Clemens, 63864, Glattbach (DE); Schmidt, Oleg, 63741, Aschaffenburg (DE)
(74) Vertreter: Stoffregen, Hans-Herbert

(57) **Zusammenfassung**

Die Erfindung bezieht sich auf ein Verfahren zum Bearbeiten eines zumindest teilweise hohlen Körpers unter Verwendung einer Schere mit einer eine erste Schneidkante aufweisenden Unterbacke, der eine Auflagefläche zugeordnet ist. Die Auflagefläche spannt eine Ebene auf, in der die Unterbacke mit ihrer Schneidkante verläuft. Ferner weist die Schere eine zu der Unterkante verschwenkbare Oberbacke mit einer zweiten Schneidkante sowie einen zu der Auflagefläche verschwenkbaren Niederhalter auf. Um zum einen ein gezieltes Durchtrennen des Körpers zu ermöglichen und zum anderen im gewünschten Umfang eine Materialbearbeitung mit derselben Schere vorzunehmen, werden folgende Verfahrensschritte durchgeführt:
- Durchtrennen des Körpers durch Verstellen der Oberbacke zu der Unterbacke bei gleichzeitigem Zusammendrücken des Körpers im Bereich dessen durch das Durchtrennen sich ausbildender Schnittkante,
- Zurückbewegen der Oberbacke und Positionieren eines abgetrennten Körperteils auf der Auflagefläche und
- Verstellen des Niederhalters in Richtung der Auflagefläche zum Bearbeiten des Körperteils, wobei die Oberbacke in einer zu dem Körper beabstandeten Position verbleibt.

## Beschreibung

Die Erfindung bezieht sich auf ein Verfahren zum Bearbeiten eines eine metallische Umhüllende aufweisenden oder zumindest teilweisen hohlen Körpers unter Verwendung einer Vorrichtung wie Schere mit einer eine erste Schneidkante aufweisenden Unterbacke mit einer zugeordneten Auflagefläche, die eine Ebene aufspannt, in der oder in deren Bereich die Unterbacke mit ihrer Schneidkante verläuft, einer zu der Unterkante verschwenkbaren Oberbacke mit einer zweiten Schneidkante sowie einem zu der Auflagefläche verschwenkbaren Niederhalter.

Ferner nimmt die Erfindung Bezug auf die Verwendung einer Schere mit Unterbacke und zu dieser verschwenkbarer Oberbacke, einer der Unterbacke zugeordneten Auflagefläche sowie einem der Oberbacke zugeordneten Niederhalter.

Fahrzeugkatalysatoren dienen der Abgasnachbehandlung in Fahrzeugen mit Verbrennungsmotoren, um Schadstoffemissionen im Abgas zu reduzieren. Typischer Aufbau von Fahrzeugkatalysatoren ist in ein aus Metall bestehendes Gehäuse, in dem ein aus Keramik oder Metallfolien bestehender Träger angeordnet ist, auf dem sich der sogenannte Washcoat befindet. In dem Washcoat sind katalytisch aktive Edelmetalle eingelagert, wie Platin, Rhodium und/oder Palladium. Zur Rückgewinnung der Edelmetalle erfolgt eine mechanische Aufbereitung und chemische Verarbeitung. Zur mechanischen Aufbereitung werden die Gehäuse mit hydraulischen Scheren aufgeschnitten, um anschließend einen Aufschluss zu ermöglichen. Bei Metallträgerkatalysatoren werden die aufgeschnittenen Katalysatoren sodann z. B. in einem Querstromzerspaner zerkleinert, wobei entweder während des Zerkleinerns bevorzugterweise jedoch nach dem Zerkleinern Edelmetallpartikel sowie kleinere aus dem Trägerkatalysator entstandene Partikel abgetrennt werden. Ein Abtrennen während des Zerkleinerns ist aus der DE-C-41 22 717 bekannt.

Das Durchtrennen der Katalysatoren kann mit einer hydraulischen Schere erfolgen, wie diese z. B. von der JMC-Recycling System Ltd., England, angeboten wird. Dabei weist die Schere eine feststehende Unterbacke mit Schneidkante, also ein Scherenunterteil und eine zu diesem verschwenkbare Oberbacke mit Schneidkante, also Scherenoberteil auf. Die Unterbacke weist eine Auflagefläche auf, um den zu durchtrennenden Katalysator positionieren zu können. Da sich die Auflagefläche allein entlang der Seite der Unterbacke erstreckt, die außerhalb der Schwenkbewegung der Oberbacke verläuft, besteht die Gefahr, dass dann, wenn der Katalysator zu weit über der Schneidkante der Unterbacke vorsteht, der Katalysator wegkippt. Daher wird üblicherweise der Katalysator von dem Bediener von Hand gehalten mit der Folge, dass beim Zerkleinern die Gefahr einer Verletzung bestehen kann, sofern diese nicht rechtzeitig weggezogen wird; denn beim Schneiden wirken auf den Katalysator Kippkräfte ein, die dazu führen, dass der Katalysator in Richtung der Oberbacke verschwenkt wird, so dass in diesem Bereich eine Quetschgefahr erwächst.

Sollen mit einer entsprechenden Schneidvorrichtung kleine Gegenstände durchtrennt werden, so ist ein ordnungsgemäßes Positionieren grundsätzlich ohne Hilfsmittel nicht möglich. Daher werden nach dem Stand der Technik entsprechende Kleinteile z. B. mittels einer Zange festgehalten. Eine diesbezügliche Handhabung ist umständlich und birgt die Gefahr, dass die Zange selbst in den Schwenkbereich der Oberbacke gelangt.

Des Weiteren geht von der Oberbacke ein fest mit dieser verbundener Niederhalter aus, der sich entlang der Auflagefläche erstreckt. Mittels des Niederhalters besteht die Möglichkeit, einen durchtrennten Katalysator aufzubiegen, in dem die Schnittkante des jeweiligen durchtrennten Katalysatorteils quer zur Auflagefläche ausgerichtet wird. Da der Niederhalter eine Einheit mit der Oberbacke bildet, wird die Oberbacke zusammen mit dem Niederhalter verstellt und somit in Richtung der Unterbacke beim Aufbiegen des Katalysators. Somit sind besondere Sicherheitsmaßnahmen erforderlich, um sicherzustellen, dass beim Aufbiegen eine Gefährdung durch den zwischen Unter- und Oberbacke sich verringernden von Schneidkanten begrenzten Spalt vermieden wird. Auch sind relativ große Massen zum Aufbiegen bewegbar, so dass ein entsprechender Steueraufwand erforderlich ist, um gezielt Katalysatorenhälften aufzubiegen, insbesondere dann, wenn nacheinander Katalysatoren unterschiedlicher Querschnitte bearbeitet werden sollen.

Der DE-C-856 818 ist eine Schrottschere zu entnehmen, bei der die Schneidkante eines unteren Scherenmessers geneigt zur Horizontalen verläuft.

Um Metall oder Beton zu durchtrennen, wird nach der US-A-5,715,603 eine Schneidvorrichtung mit Unter- und Oberbacke sowie einem Dämpfungsglied vorgeschlagen, durch das verhindert werden soll, dass die Backen seitlich zueinander ausweichen.

Um Drahtbündel bzw. Drahtseile zu durchtrennen, sieht die DE-U-20 2004 012 247 eine Schneidvorrichtung vor, die horizontal verschwenkbare Schneidbacken umfasst, von denen eine mehrere zueinander beabstandete Ausnehmungen aufweist.

Eine Schrottschere insbesondere für Automobile ist aus der DE-A-31 36 832 bekannt. Die Schrottschere geht von einem Maschinengestell mit einer Mulde aus, in die das zu zerschneidende Automobil eingebracht wird. Zum Zerschneiden und Pressen ist eine gegabelte Pressbackeneinrichtung vorgesehen, die ein Hubteil und ein Schneideteil umfasst.

Eine Schrottschere für z. B. Behälter, Kessel oder Kraftwagenkarosserien nach der DE-C-845 438 umfasst einen in einem Maschinengestell in waagerechter Ebene verschiebbar geführten Messerschlitten, der eine nach oben frei zugängliche Einfüllöffnung begrenzt. Durch das Verstellen des Messerschlittens wird die Einfüllöffnung verringert, so dass diese die Funktion eines Vorquetschraums ausübt.

Um einen ein Gehäuse mit einem Boden umfassenden Ölfilter zu zerlegen, wird nach der DE-U-91 16 858 eine Vorrichtung vorgeschlagen, die ein Untermesser mit einer der Stärke des Bodens entsprechenden Dicke umfasst. Dicht über dem Untermesser ist verschwenkbar ein Obermesser angeordnet.

Aus der DE-B-10 2008 002 876 sind ein Verfahren und eine Vorrichtung zum Zerkleinern von voluminösen Metallteilen, insbesondere Katalysatoren, bekannt. Die Vorrichtung umfasst eine Unterbacke und eine Oberbacke, die als integralen Bestandteil einen Niederhalter umfasst.

In der DE-B-1 911 387 wird eine Maschine zum Vorverdichten und Zerteilen von Schrott beschrieben, die ein ein Schneidmesser aufweisendes Oberwerkzeug sowie ein ein Gegenschneidmesser aufweisendes Unterwerkzeug umfasst. Unabhängig von diesen ist ein mit einem Schutzschild verbundener Niederhalter verstellbar.

Um einen Abgaskatalysator aufzuschneiden, wird nach der DE-A-10 2006 002 182 ein Rollenmesser benutzt, dessen Drehachse parallel zu einer Drehachse einer Aufschneidstation verläuft, von der der Katalysator aufgenommen ist.

Um Kraftfahrzeugkatalysatoren zu zerlegen, sieht die DE-A-100 40 715 einen Stößel mit Schwert vor, das in den Katalysator eingetrieben wird.

Der vorliegenden Erfindung liegt die Aufgabe zu Grunde, ein Verfahren der eingangs genannten Art so weiterzubilden, dass zum einen ein gezieltes Durchtrennen eines Körpers ermöglicht wird und zum anderen im gewünschten Umfang eine Materialbearbeitung mit derselben Schere bzw. Vorrichtung erfolgen kann, wobei allein die Bauelemente der Vorrichtung genutzt werden sollen, die für die jeweilige Tätigkeit benötigt werden.

Zur Lösung der Aufgabe sieht die Erfindung im Wesentlichen vor, ein Verfahren zum Bearbeiten eines eine metallische Umhüllende aufweisenden oder zumindest teilweisen hohlen Körpers unter Verwendung einer Schere mit einer eine erste Schneidkante aufweisenden Unterbacke mit einer zugeordneten Auflagefläche, die eine Ebene aufspannt, in der oder in deren Bereich die Unterbacke mit ihrer Schneidkante verläuft, einer zu der Unterkante verschwenkbaren Oberbacke mit einer zweiten Schneidkante sowie einem zu der Auflagefläche verschwenkbaren Niederhalter, umfassend die Verfahrensschritte:
- Durchtrennen des Körpers durch Verstellen der Oberbacke zu der Unterbacke bei gleichzeitigem Zusammendrücken des Körpers im Bereich dessen durch das Durchtrennen sich ausbildender Schnittkante,
- Zurückbewegen der Oberbacke und Positionieren eines abgetrennten Körperteils auf der Auflagefläche und
- Verstellen des Niederhalters in Richtung der Auflagefläche zum Bearbeiten des Körperteils, wobei die Oberbacke in einer zu dem Körper beabstandeten Position verbleibt.

Erfindungsgemäß übt der Niederhalter eine Doppelfunktion aus, nämlich zum einen eine passive beim Schneidvorgang, um den zu durchtrennenden Körper niederzuhalten, und zum anderen eine aktive, nämlich dann, wenn unabhängig von einer Bewegung der Oberbacke ein Körper formend bearbeitet wie ein durchtrennter Katalysator aufgebogen werden soll.

Bei letzterer Funktion wird die Oberbacke in ihrer Ausgangsposition gehalten, um sodann den Niederhalter in Richtung des zu bearbeitenden Körpers zu verstellen. Hierzu kann der Niederhalter proportional gesteuert werden, um gezielt die gewünschte Verformungskraft in den Körper einzuleiten.

Eine Weiterbildung der Erfindung sieht vor, dass der Niederhalter durch Betätigen einer Handhabe proportional gesteuert wird. Bei der Handhabe kann es sich um einen Joystick, Drehknopf oder ein Schieber oder Schieberregler oder andere geeignete Mittel handeln, um den Niederhalter im gewünschten Umfang anzusteuern. Dabei sind die Handhabe und die mit dieser verbundenen Steuerung derart ausgebildet, dass bei fehlender Einwirkung auf die Handhabe der Niederhalter in seine Ausgangsstellung zurückverschwenkt wird. Hierdurch ist eine erhöhte Sicherheit gewährleistet.

Des Weiteren ist vorgesehen, dass der Niederhalter um eine Achse verschwenkt wird, die zu der der Oberbacke beabstandet ist. Insbesondere läuft die Schwenkachse des Niederhalters oberhalb der von der Auflagefläche aufgespannten Ebene.

Ferner kann die Oberbacke mittels einer Zweihandbedienung aktiviert werden. Durch diese Maßnahmen ist sichergestellt, dass beim Durchtrennen des Körpers eine Gefährdung der die Vorrichtung bedienenden Person unterbleibt. Dabei sollte die Zweihandbedienung derart ausgelegt sein, dass Bedienknöpfe in einem zeitlichen Abstand von weniger als 2 Sekunden von den Händen des Bedieners aktiviert werden müssen, um eine Schneidbewegung der Oberbacke auslösen zu können.

Handelt es sich bei dem durchzutrennenden und sodann aufzubiegenden Körper insbesondere um einen Kraftfahrzeugkatalysator, so ist hierdurch die erfindungsgemäße Lehre in ihrem Anwendungsfall nicht beschränkt. Vielmehr ist die Erfindung für jedweden Körper möglich, der eine eigensteife und mittels einer zu einer Unterbacke verstellbaren Oberbacke zu durchtrennende Umhüllende aufweist. Dabei ist der Begriff Umhüllende weit auszulegen, so dass auch Körper erfasst sind, die im eigentlichen Sinne eine Umhüllende nicht aufweisen, sondern nur teilweise hohl ausgebildet sind.

Beim Durchtrennen des Körpers selbst eilt der Niederhalter der Bewegung der Oberbacke voraus, so dass hierdurch sichergestellt wird, dass beim Kontaktieren des Körpers durch die Oberbacke dieser nicht wegkippen kann.

Des Weiteren zeichnet sich die Erfindung aus durch eine Verwendung einer Schere mit Unterbacke und zu dieser verschwenkbarer Oberbacke, einer der Unterbacke zugeordneten Auflagefläche sowie einem der Oberbacke zugeordneten Niederhalter, wobei beim Verschwenken der Oberbacke zu der Unterbacke zum Durchtrennen eines eine metallische Umhüllende aufweisenden oder zumindest teilweise hohlen Körpers der Niederhalter den Körper auf der Auflagefläche niederhält oder der Niederhalter bei einer zum Körper beabstandeten Position der Oberbacke in Richtung der Auflagefläche zum formgebenden Bearbeiten des oder eines auf der Auflagefläche angeordneten zumindest teilweise hohlen Körpers verschwenkt wird.

Weitere Einzelheiten, Vorteile und Merkmale der Erfindung ergeben sich nicht nur aus den Ansprüchen, den diesen zu entnehmenden Merkmalen ― für sich und/oder in Kombination -, sondern auch aus der nachfolgenden Beschreibung eines der Zeichnung zu entnehmenden bevorzugten Ausführungsbeispiels.

Es zeigen:
- Fig. 1: eine Vorderansicht einer Vorrichtung zum Bearbeiten eines Körpers,
- Fig. 2: eine Seitenansicht von Ober- und Unterbacke der Vorrichtung gemäß Fig. 1,
- Fig. 3: eine Prinzipdarstellung der Ober- und Unterbacke der Vorrichtung gemäß Fig. 1 und 2 mit zwischen diesen angeordnetem zu durchtrennenden Körper,
- Fig. 4: eine der Fig. 3 entsprechende Prinzipdarstellung von Ober- und Unterbacke sowie Niederhalter zu Beginn eines Arbeitstaktes,
- Fig. 5: eine der Fig. 4 entsprechende Prinzipdarstellung zu einem späteren Zeitpunkt des Arbeitstaktes,
- Fig. 6: eine weitere Prinzipdarstellung des Arbeitstaktes,
- Fig. 7: eine Prinzipdarstellung der Vorrichtung gemäß der Fig. 1 - 6 vor Beginn eines Verformvorgangs und

- Fig. 8: die Vorrichtung gemäß Fig. 7 während des Verformvorganges.

Anhand der Figuren, für die grundsätzlich für gleiche Elemente gleiche Bezugszeichen benutzt werden, soll das erfindungsgemäße Verfahren verdeutlicht werden, aufgrund dessen mit ein und derselben Vorrichtung ein Durchtrennen eines insbesondere metallischen Körpers 10 einerseits und Verformen des Körpers 10 andererseits erfolgen kann. Bei dem Körper 10 handelt es sich im Ausführungsbeispiel um einen Kraftfahrzeugkatalysator, dessen Gehäuse durchtrennt werden soll, um z. B. eine weitere mechanische Aufbereitung zu ermöglichen. Allerdings ist die Erfindung auf Katalysatoren nicht beschränkt. Vielmehr bezieht sich diese ganz allgemein auf Körper, die entweder eine Umhüllende aufweisen oder zumindest teilweise als Hohlkörper derart ausgebildet sind, dass beim Durchtrennen ein Zusammenbiegen erfolgt.

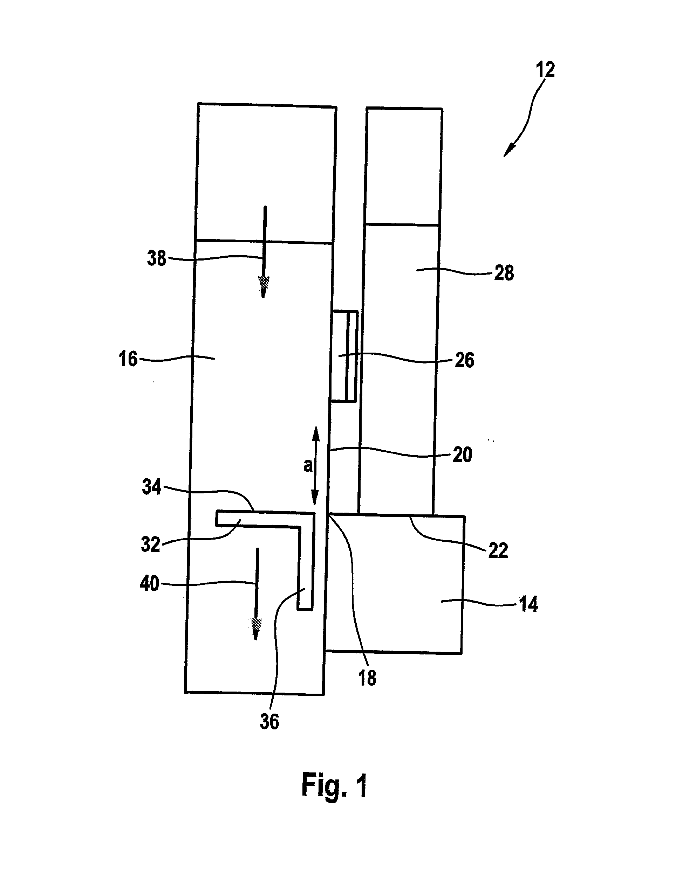

Prinzipielle Bauteile einer Vorrichtung 12 zum Durchführen des erfindungsgemäßen Verfahrens sind der Fig. 1 zu entnehmen. Die Vorrichtung 12 umfasst eine stationär angeordnete Unterbacke 14 und eine zu dieser verschwenkbare Oberbacke 16. Unter-und Oberbacke 14, 16 weisen Schneidkanten 18, 20 auf, um den Körper 10 zu durchtrennen. Dabei wird beim Verschwenken der Oberbacke 16 deren Schneidkante 20 mit geringem Spalt entlang der Schneidkante 18 der Unterbacke vorbeigeführt wird, wie dies von scherenartigen Trennvorrichtungen bekannt ist. Die Unterbacke 14 weist auf ihrer der Oberbacke zugewandten Seite eine erste Auflagefläche 22 zum Positionieren des Körpers 10 auf.

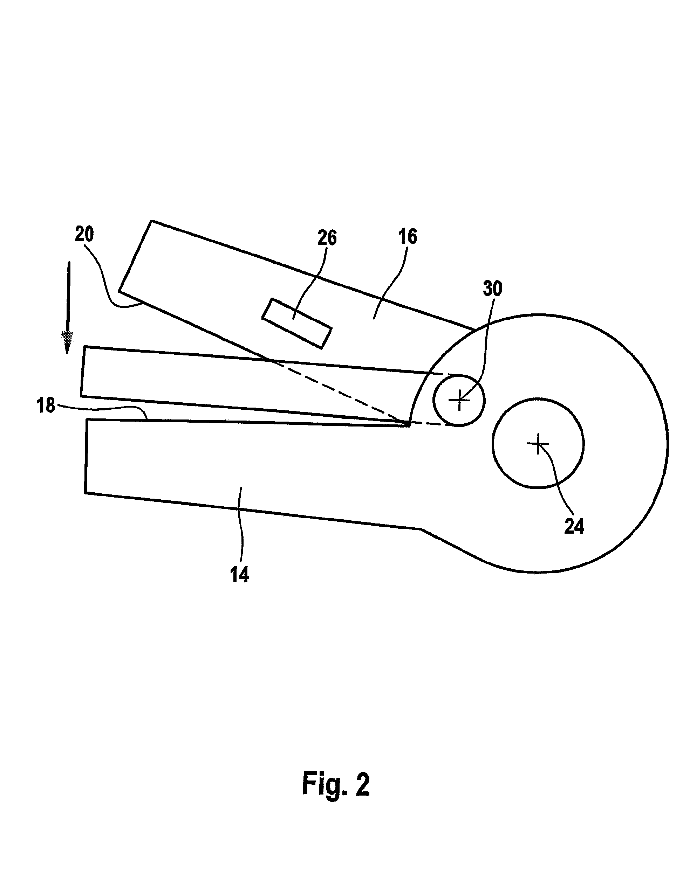

Wie sich aus der Fig. 2 ergibt, ist die Oberbacke 16 um eine Achse 24 zu der Unterbacke 14 derart verschwenkbar, dass die Schneidkanten 18, 20 Schenkel eines V bilden, dessen Spitze achsenseitig verläuft.

Des Weiteren geht von der Oberbacke 16 ein erster Niederhalter 26 aus, der mit der Oberbacke 16 eine starre Einheit bildet. Neben dem stationären Niederhalter 26 ist ein zweiter Niederhalter 28 vorgesehen, der um eine Achse 30 verschwenkbar ist, die beabstandet zu der Achse 24 der Oberbacke 16 und insbesondere oberhalb der Schneidkante 18 der Unterbacke 16 und damit der ersten Auflagefläche 22 verläuft, wie rein prinzipiell der Fig. 2 zu entnehmen ist.

Der erste Niederhalter 26 verläuft mit seiner Unterseite, also in seinem der ersten Auflagefläche 22 zugewandten Bereich beabstandet zur Schneidkante 20, wobei ein Abstand von zumindest 5 cm eingehalten werden sollte. Hierdurch wird sichergestellt, dass das Trennen voluminöser Körper 10 wie Kraftfahrzeugkatalysatoren nicht behindert wird, gleichzeitig die Gefahr eines Quetschens unterbunden wird.

Des Weiteren verläuft neben der Unterbacke 14, die oberseitig die erste Auflagefläche 22 bildet, ein Auflager 32, dessen Oberseite im Ausgangszustand bündig oder nahezu bündig zu der ersten Auflagefläche 22, also der Oberseite der Unterbacke 14, verläuft. Das Auflager 32 kann ein L-Profil sein, dessen horizontal verlaufender Schenkel, d. h. dessen Oberseite eine Auflagefläche 34 bildet. Der zu dem horizontalen Schenkel senkrecht verlaufende Schenkel 36 ist im Ausführungsbeispiel vertikal ausgerichtet und erstreckt sich entlang der Unterbacke 14.

Das Auflager 32 mit seiner oberen freien Fläche, die als zweite Auflagefläche 34 bezeichnet wird, bildet mit der ersten Auflagefläche 22 eine Gesamtauflage für den Körper 10, so dass ein sicheres Positionieren erfolgt, unabhängig davon, in welchem Umfang der Körper 10 über der Schneidkante 18 vorsteht.

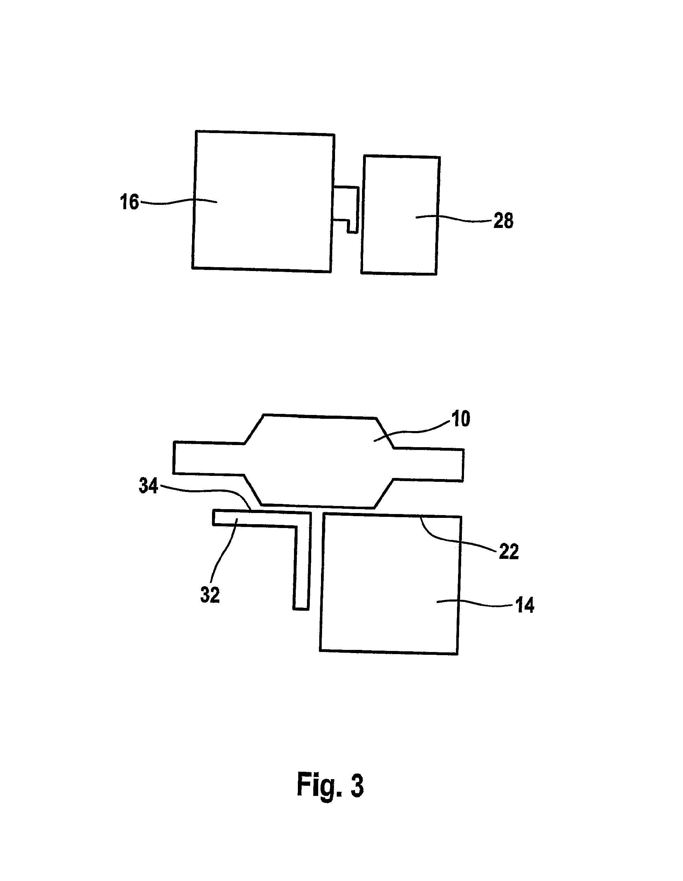

Das Auflager 32 ist jedoch mit der Oberbacke 16 zwangsgekoppelt, so dass beim Verschwenken der Oberbacke 16 das Auflager 32 mitverstellt wird, wie die Pfeile 38, 40 in Fig. 1 verdeutlichen sollen. Somit stellt das Auflager 32 keine Behinderung beim Arbeitstakt Schneiden dar, kann jedoch in der Grundposition (Fig. 3) nahe der Unterbacke 14 verlaufen, so dass sich infolgedessen nur ein geringer Spalt zwischen dem Auflager 32 und der Unterbacke 14 ausbildet.

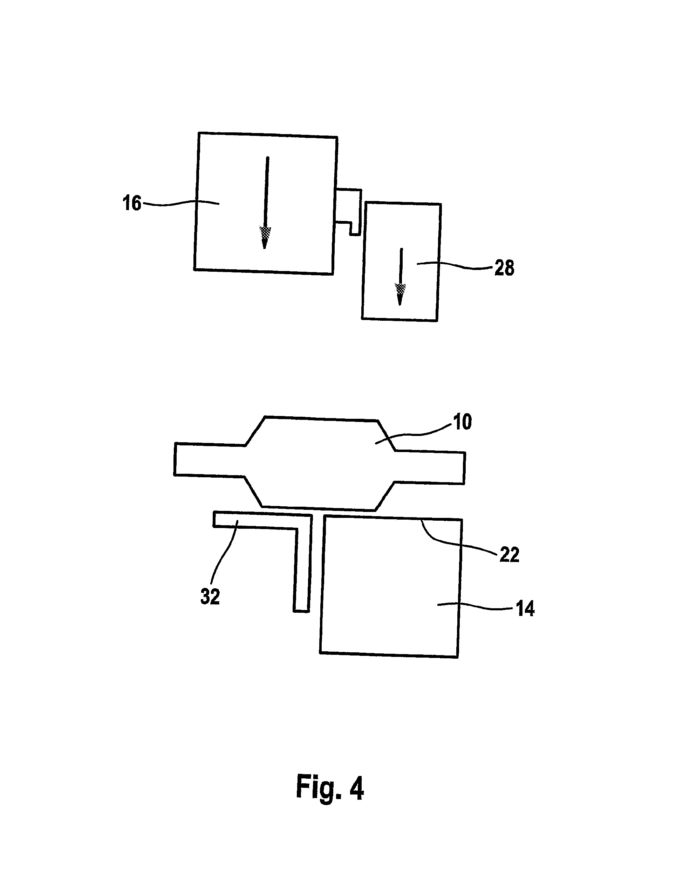

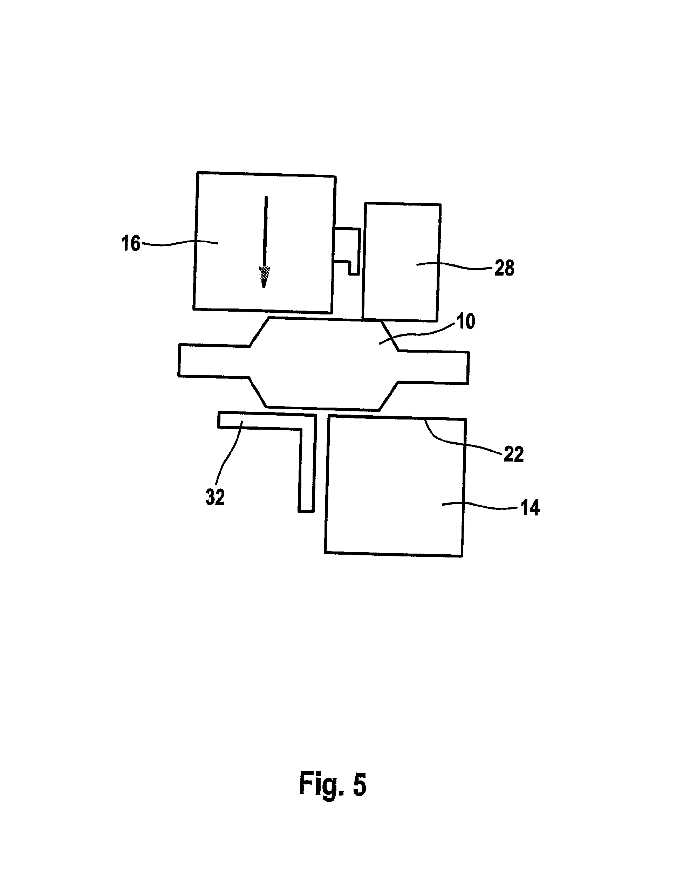

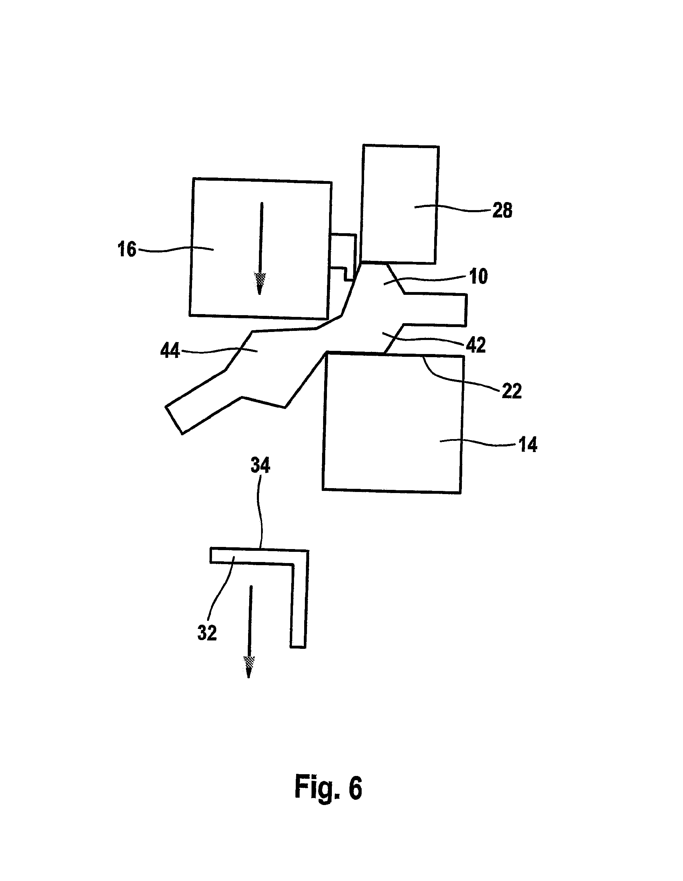

Vor Beginn des Durchtrennens, wie dies der Fig. 3 zu entnehmen ist, wird der Körper 10 auf die von dem Auflager 32, d. h. dessen Auflagefläche 34, und der ersten Auflagefläche 22 gebildeten Gesamtauflagefläche positioniert. Dabei sind die Oberbacke 16 und der zweite Niederhalter 28 beabstandet zu der Gesamtauflagefläche angeordnet, also in einer sogenannten oberen Grundstellung. Zum Durchtrennen werden sowohl die Oberbacke 16 als auch der zweite Niederhalter 28 um die Achse 24 bzw. 30 verschwenkt, wobei der zweite Niederhalter 28 voreilt, wie die Fig. 4 prinzipiell verdeutlicht. Bevor der Trennvorgang eingeleitet wird, liegt der zweite Niederhalter 28 auf dem Körper 10 auf, so dass beim Durchtrennen ein Wegkippen des Körpers 10 unterbleibt. Dies wird prinzipiell aus einem Vergleich der Fig. 5 und 6 deutlich. Die Fig. 6 vermittelt des Weiteren die Lehre, dass das Auflager 32 zumindest von dem Zeitpunkt an zusammen mit der Oberbacke 16 verschwenkt wird, zu dem die Oberbacke 16 den Körper 10 erfasst.

Nach erfolgtem Durchtrennen werden die Oberbacke 16 und der zweite Niederhalter 28 in die obere Grundposition zurückverschwenkt. Auch wird das Auflager 32 mit seiner Oberseite 34 fluchtend zur ersten Auflagefläche 22 ausgerichtet.

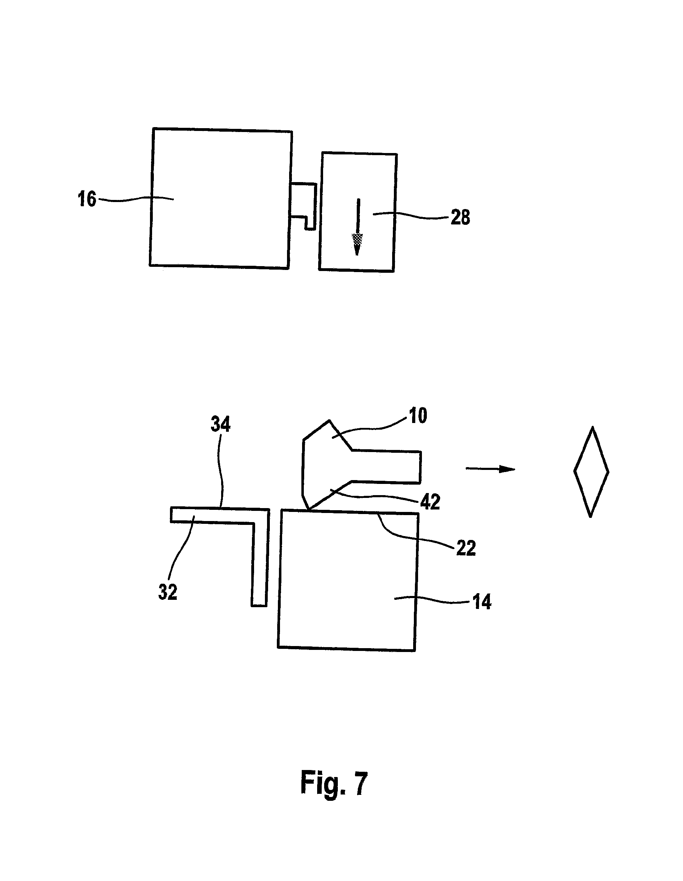

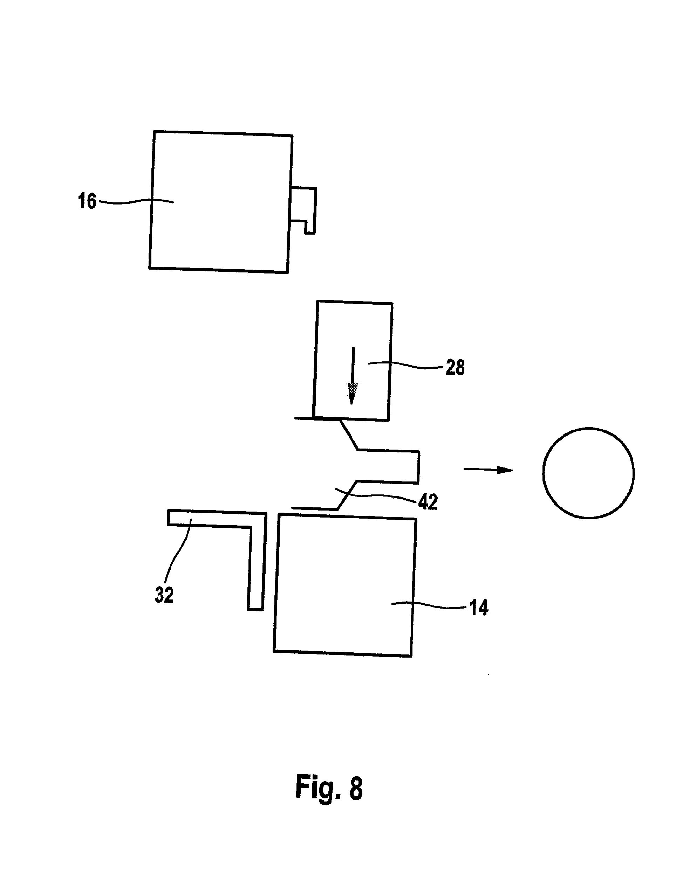

Wie die Fig. 7 rechts rein prinzipiell verdeutlichen soll, wird der Körper 10 beim Durchtrennen im Bereich der Schnittkante zusammengedrückt, so dass sich von der z. B. ursprünglichen Kreisgeometrie eine langgestreckte Vierecksgeometrie oder eine ähnliche Geometrie ergibt. Um jedoch in dem jeweiligen Körperteil 40, 42 vorhandene Elemente wie Träger und Washcoat bei Katalysatoren als Körper 10 zugänglich zu machen, muss die jeweilige Hälfte 42, 44 im Bereich ihrer Schnittkante aufgebogen werden. Hierdurch wird eine problemlose weitere Aufbereitung im gewünschten Umfang ermöglicht. Hierzu wird erfindungsgemäß der zweite Niederhalter 28 benutzt, der unabhängig von der Oberbacke 16 verschwenkbar ist. Dies ergibt sich aus der Fig. 8. So ist erkennbar, dass der zweite Niederhalter 28 von seiner oberen Grundposition (Fig. 7) in Richtung der Körperhälfte 42 verschwenkt wird. Gleichzeitig verbleibt die Oberbacke 16 in ihrer oberen Grundstellung.

Der Niederhalter 28 wird proportional gesteuert in Richtung der Körperhälfte 42 verschwenkt und leitet in die Hälfte 42 des Körpers 10 in einem Umfang Kräfte ein, dass ein Aufbiegen entlang der Schnittkante der Körperhälfte 42 erfolgt, so dass sich in etwa wieder eine kreisrunde Öffnung ergibt, wie das Schnittbild in Fig. 8 rechts symbolisiert. Weist der Körper 10 andere Querschnittsgeometrien auf, so kann durch gezieltes Verstellen und Ausrichten der jeweiligen Körperhälfte gleichfalls eine Druckbeaufschlagung auf den Schneidkantenbereich derart erfolgen, dass in etwa die Ausgangsgeometrie erreichbar ist. Dies ist jedoch nicht zwingend erforderlich, da es grundsätzlich ausreicht, dass der Schneidkantenbereich derart aufgebogen wird, dass die im Inneren sich befindenden Elemente entfernt werden können, ohne dass es weiterer mechanischer Bearbeitungen bedarf.

Erfindungsgemäß weist der zweite Niederhalter 28 eine Doppelfunktion auf. So übt der Niederhalter 28 beim Durchtrennen des Körpers 10 eine quasi passive Funktion aus, indem ausschließlich ein Niederhalten des zu durchtrennenden Körpers erfolgt, ohne dass dieser aktiv von dem Niederhalter 28 bearbeitet wird.

Soll nach dem Trennvorgang der Körper 10 im Schnittbereich aufgebogen werden, so übt der zweite Niederhalter 28 eine aktive Funktion aus, nämlich ein Umformen der Körperhälfte im Bereich des Schnittkantenbereichs, um eine gewünschte Querschnittgeometrie zu erzielen, die es ermöglicht, dass das Innere der Körperhälfte frei zugänglich ist.

Der Niederhalter 28 kann z. B. mittels eines Joysticks proportional gesteuert verstellt werden. Dabei ist insbesondere vorgesehen, dass dann, wenn auf den Joystick von einem Bediener eine Zwangskraft nicht einwirkt, der zweite Niederhalter 28 automatisch in seine obere Grundposition zurückverfahren wird. Anstelle eines Joysticks können auch andere Handhaben benutzt werden, die hinlänglich aus dem Stand der Technik bekannt sind.

Des Weiteren ist vorgesehen, dass die Oberbacke 16 über eine Zweihandbedienung ansteuerbar ist. Dies bedeutet, dass ein Bediener mit jeder Hand einen Betätigungsknopf bedienen muss, damit ein Herabfahren der Oberbacke 16 und damit Schneiden erfolgen kann. Dabei ist insbesondere vorgesehen, dass die Bedienungsknöpfe in einem Zeitabstand von weniger als 2 Sekunden aktiviert werden müssen, um einen Trennvorgang auslösen zu können.

## Patentansprüche

1. Verfahren zum Bearbeiten eines eine metallische Umhüllende aufweisenden oder zumindest teilweisen hohlen Körpers unter Verwendung einer Vorrichtung wie Schere mit einer eine erste Schneidkante aufweisenden Unterbacke mit einer zugeordneten Auflagefläche, die eine Ebene aufspannt, in der oder in deren Bereich die Unterbacke mit ihrer Schneidkante verläuft, einer zu der Unterkante verschwenkbaren Oberbacke mit einer zweiten Schneidkante sowie einem zu der Auflagefläche verschwenkbaren Niederhalter, umfassend die Verfahrensschritte:
- Durchtrennen des Körpers durch Verstellen der Oberbacke zu der Unterbacke bei gleichzeitigem Zusammendrücken des Körpers im Bereich dessen durch das Durchtrennen sich ausbildender Schnittkante,
- Zurückbewegen der Oberbacke und Positionieren eines abgetrennten Körperteils auf der Auflagefläche und
- Verstellen des Niederhalters in Richtung der Auflagefläche zum Bearbeiten des Körperteils, wobei die Oberbacke in einer zu dem Körper beabstandeten Position verbleibt.

2. Verfahren nach Anspruch 1,
**dadurch gekennzeichnet,**
**dass** beim Verschwenken des Niederhalters zum Bearbeiten des Körpers die Oberbacke in ihrer vor dem Durchtrennen eingenommenen Ausgangsposition verbleibt.

3. Verfahren nach Anspruch 1 oder 2,
**dadurch gekennzeichnet,**
**dass** das Körperteil mit seiner Schneidkante derart auf der Auflagefläche positioniert wird, dass die Schneidkante quer zur Auflagefläche verläuft und dass der Niederhalter bei still stehender Oberbacke in einem Umfang in Richtung der Auflagefläche verschwenkt wird, dass der Niederhalter das Körperteil im Bereich der Schneidkante aufbiegt.

4. Verfahren nach zumindest einem der Ansprüche 1 - 3,
**dadurch gekennzeichnet,**
**dass** der Niederhalter um eine Achse verschwenkt wird, die zu der der Oberbacke beabstandet ist, insbesondere oberhalb der von der Auflagefläche aufgespannten Ebene verläuft.

5. Verfahren nach zumindest einem der vorhergehenden Ansprüche,
**dadurch gekennzeichnet,**
**dass** der Niederhalter proportional gesteuert wird.

6. Verfahren nach zumindest einem der vorhergehenden Ansprüche,
**dadurch gekennzeichnet,**
**dass** der Niederhalter durch Betätigen einer Handhabe verschwenkt wird, wobei bei fehlender Einwirkung auf die Handhabe der Niederhalter in seine Ausgangsstellung zurückverschwenkt wird.

7. Verfahren nach zumindest einem der vorhergehenden Ansprüche,
**dadurch gekennzeichnet,**
**dass** die Oberbacke über eine Zweihandbedienung aktiviert wird.

8. Verfahren nach zumindest einem der vorhergehenden Ansprüche,
**dadurch gekennzeichnet,**
**dass** als Körper ein Kraftfahrzeugkatalysator verwendet wird.

9. Verfahren nach zumindest einem der vorhergehenden Ansprüche,
**dadurch gekennzeichnet,**
**dass** beim Durchführen des Durchtrennens des Körpers der Niederhalter der Bewegung der Oberbacke vorauseilt.

10. Verwendung einer Vorrichtung mit Unterbacke und zu dieser verschwenkbarer Oberbacke, einer der Unterbacke zugeordneten Auflagefläche sowie einem der Oberbacke zugeordneten Niederhalter, wobei beim Verschwenken der Oberbacke zu der Unterbacke zum Durchtrennen eines eine metallische Umhüllende aufweisenden oder zumindest teilweise hohlen Körpers der Niederhalter den Körper auf der Auflagefläche niederhält oder der Niederhalter bei einer zum Körper beabstandeten Position der Oberbacke in Richtung der Auflagefläche zum formgebenden Bearbeiten des oder eines auf der Auflagefläche angeordneten zumindest teilweise hohlen Körpers verschwenkt wird.
